# EUROPÄISCHE PATENTSCHRIFT

(11) **EP 3 664 465 B1**
(45) Veröffentlichungstag und Bekanntmachung des Hinweises auf die Patenterteilung: **24.01.2024**
(21) Anmeldenummer: 18210084.2
(22) Anmeldetag: 04.12.2018
(51) Int. Cl.: H04Q 3/66, G05B 19/418, H04L 47/24

(54) **VERFAHREN ZUM BETRIEB EINES KOMMUNIKATIONSSYSTEMS ZUR ÜBERMITTLUNG ZEITKRITISCHER DATEN, UND KOMMUNIKATIONSSTEUERUNGSEINRICHTUNG**
METHOD FOR OPERATING A COMMUNICATION SYSTEM FOR TRANSFERRING TIME-CRITICAL DATA, AND COMMUNICATION CONTROL DEVICE
PROCÉDÉ DE FONCTIONNEMENT D'UN SYSTÈME DE COMMUNICATION DESTINÉ À LA TRANSMISSION DE DONNÉES CRITIQUES TEMPORELLES, ET DISPOSITIF DE COMMANDE DE COMMUNICATION

(43) Veröffentlichungstag der Anmeldung: 10.06.2020
(73) Patentinhaber: Siemens Aktiengesellschaft, 80333 München (DE)
(72) Erfinder: Steindl, Günter, 92284 Poppenricht (DE)
(74) Vertreter: Siemens Patent Attorneys

(56) Entgegenhaltungen:
- EP-A1- 3 038 325
- US-B1- 9 270 426
- MEYER PHILIPP ET AL: "Extending IEEE 802.1 AVB with time-triggered scheduling: A simulation study of the coexistence of synchronous and asynchronous traffic", 2013 IEEE VEHICULAR NETWORKING CONFERENCE, IEEE, 16. Dezember 2013 (2013-12-16), Seiten 47-54, XP032567226, DOI: 10.1109/VNC.2013.6737589 [gefunden am 2014-02-11]

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qav sind Credit-based Shaper (CBS) als Maß für eine Bandbreitenüberwachung definiert worden.

Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

In der älteren internationalen Patentanmeldung PCT/EP2017/ 066175 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressoucenreservierung vorgenommen.

Der vorliegenden Erfindung liegt die Aufgabe zugrunde, ein Verfahren zum Betrieb eines Kommunikationssystems zur Übermittlung zeitkritischer Daten schaffen, das sowohl eine effiziente Ausschöpfung zur Verfügung stehender Systemressourcen als auch eine flexible und schnelle Anpassung an veränderte betriebliche Rahmenbedingungen ermöglicht, und geeignete Vorrichtungen zur Durchführung des Verfahrens anzugeben.

Diese Aufgabe wird erfindungsgemäß durch ein Verfahren mit den in Anspruch 1 angegebenen Merkmalen und durch eine Kommunikationssteuerungseinrichtung mit den in Anspruch 14 angegebenen Merkmalen gelöst. Vorteilhafte Weiterbildungen sind in den abhängigen Ansprüchen angegeben.

Entsprechend dem erfindungsgemäßen Verfahren zum Betrieb eines Kommunikationssystems zur Übermittlung zeitkritischer Daten werden ausgewählte Datagramme Datenströmen zugeordnet und zwischen ersten Kommunikationsgeräten an ersten Netzknoten und zweiten Kommunikationsgeräten an zweiten Netzknoten über zumindest die ersten und zweiten Netzknoten umfassende Pfade übermittelt. Dabei ist an ausgewählten Kommunikationsgeräten jeweils eine lokale Zyklusdauer einstellbar, die ein Vielfaches einer allgemeinen Zyklusdauer ist. Die lokale Zyklusdauer kann insbesondere auch der allgemeinen Zyklusdauer entsprechen. Zur Reservierung von durch Kommunikationsgeräte für eine Übertragung von Datenströmen bereitzustellenden Ressourcen werden Reservierungsanfragen, die jeweils zumindest Angaben zu einem ersten und zweiten Netzknoten und Dienstgüteparameter umfassen, jeweils durch eine Reservierungsfunktionskomponente, die einem ersten oder zweiten Kommunikationsendgerät oder einem mit diesem verbundenen Datagramme weiterleitenden Kommunikationsgerät zugeordnet ist, an eine übergeordnete Kommunikationssteuerungseinrichtung übermittelt werden. Die übergeordnete Kommunikationssteuerungseinrichtung ermittelt bei Reservierungsanfragen jeweils einen Pfad und überprüft, ob in den Kommunikationsgeräten entlang des jeweiligen Pfades ausreichende Ressourcen für die Übertragung der Datenströme unter Einhaltung der spezifizierten Dienstgüteparameter verfügbar sind. Für die ausgewählten Kommunikationsgeräte ermittelt die übergeordnete Kommunikationssteuerungseinrichtung eine vorgeschlagene lokale Zyklusdauer. Die durch die Kommunikationsgeräte bereitzustellenden Ressourcen umfassen beispielsweise nutzbare Übertragungszeitfenster, Bandbreite, zugesicherte maximale Latenz, Queue-Anzahl, Queue-Cache, insbesondere Speicher für Datenrahmen oder -pakete, bzw. Adress-Cache, insbesondere Speicher für Adressen in Filtering Database (FDB), in Switches oder Bridges.

Erfindungsgemäß übermittelt die übergeordnete Kommunikationssteuerungseinrichtung bei ausreichenden Ressourcen vorgeschlagene lokale Zyklusdauern umfassende Konfigurationsinformationen an Konfigurationssteuerungseinheiten, die den Kommunikationsgeräten an den vom jeweiligen Pfad umfassten Netzknoten zugeordnet sind. Die Konfigurationssteuerungseinheiten richten die zugeordneten Kommunikationsgeräte entsprechend den übermittelten Konfigurationsinformationen zur Ressourcen-Bereitstellung für die Übertragung der Datenströme ein. Vorteilhafterweise werden die Datenströme auf Reservierungsanfragen jeweils bidirektional eingerichtet. Außerdem empfängt die übergeordnete Kommunikationssteuerungseinrichtung vorzugsweise von einem Engineering-System Konfigurationsrichtlinien und setzt diese in die an die Konfigurationsteuerungseinheiten übermittelten Konfigurationsinformationen um.

Darüber hinaus überwacht die übergeordnete Kommunikationssteuerungseinrichtung erfindungsgemäß zumindest eine vorgegebene Kommunikationsnetz-Domäne fortlaufend auf Topologieänderungen und ermittelt für aus Topologieänderungen resultierende geänderte Pfade aktualisierte Konfigurationsinformationen. Diese aktualisierten Konfigurationsinformationen werden zur aktualisierten Geräteeinrichtung an die Konfigurationssteuerungseinheiten übermittelt, die den Kommunikationsgeräten an von geänderten Pfaden umfassten Netzknoten zugeordnet sind. Eine fortlaufende Überwachung auf Topologieänderungen und entsprechende lokale Konfigurationsanpassung ermöglichen in Zusammenhang mit lokal bzw. dezentral vorgesehenen Reservierungsfunktionskomponenten eine flexible und schnelle Anpassung an veränderte betriebliche Rahmenbedingungen. Insbesondere durch eine Berücksichtigung von an Kommunikationsgeräten einstellbaren lokalen Zyklusdauern ergibt sich im Gegensatz zu bisherigen dezentral organisierten Ressourcenreservierungsverfahren eine effiziente Ausschöpfung zur Verfügung stehender Systemressourcen.

Entsprechend einer vorteilhaften Ausgestaltung der vorliegenden Erfindung ist das Kommunikationssystem einem industriellen Automatisierungssystem zugeordnet, das mehrere Steuerungsgeräte, beispielsweise speicherprogrammierbare Steuerungen oder Controller für Eingabe/Ausgabe-Geräte, und diesen zugeordnete Eingabe/Ausgabe-Geräte umfasst. Jedes Steuerungsgerät umfasst jeweils eine Reservierungsfunktionskomponente. Dabei fordern die Steuerungsgeräte mittels ihrer Reservierungsfunktionskomponenten für die zugeordneten Eingabe/Ausgabe-Geräte Reservierungen von Ressourcen für eine Übertragung von Datenströmen an.

Vorzugsweise umfasst jedes Kommunikationsgerät jeweils zumindest eine Konfigurationssteuerungseinheit. Bei Kommunikationsendgeräten ist es grundsätzlich ausreichend, wenn diese jeweils an ein weiterleitendes Kommunikationsgerät angeschlossen sind, das eine Reservierungsfunktionskomponente zur Übermittlung von Reservierungsanfragen aufweist. Dementsprechend kann die übergeordnete Kommunikationssteuerungseinrichtung auf erfolgreiche Reservierungsanfragen jeweils eine dem Datenstrom zugeordnete Datenstrom-Ziel-Adresse an die Reservierungsfunktionskomponente des ersten Kommunikationsendgeräts oder des mit diesem verbundenen Datagramme weiterleitenden Kommunikationsgeräts und an die Reservierungsfunktionskomponente des zweiten Kommunikationsendgeräts oder des mit diesem verbundenen Datagramme weiterleitenden Kommunikationsgeräts übermitteln.

Entsprechend einer weiteren vorteilhaften Ausgestaltung kann das Kommunikationssystem mehrere übergeordnete Kommunikationssteuerungseinrichtungen umfassen. Vorzugsweise werden die übergeordneten Kommunikationssteuerungseinrichtungen mittels einer in einem Domain Name System erfassten Dienstbeschreibung oder mittels einer Identifizierung entsprechend PROFINET Dynamic Configuration Protocol ermittelt. Damit können die übergeordneten Kommunikationssteuerungseinrichtungen untereinander anhand eines Auswahlkriteriums eine aktive übergeordnete Kommunikationssteuerungseinrichtung auswählen, wobei nicht aktive übergeordnete Kommunikationssteuerungseinrichtungen in einen Bereitschaftszustand versetzt werden. Somit kann für Ausfallszenarien zumindest eine redundante übergeordnete Kommunikationssteuerungseinrichtung bereitgehalten werden.

Vorzugsweise speichert die übergeordnete Kommunikationssteuerungseinrichtung jeweils eine zuletzt erfasste Topologie des Kommunikationssystems und für erfolgreich eingerichtete Datenströme ermittelte Pfade. Somit kann die übergeordnete Kommunikationssteuerungseinrichtung die zuletzt erfasste Topologie bei einem Betriebsstart des Kommunikationssystems laden und Topologieänderungen ermitteln. In Abhängigkeit von ermittelten Topologieänderungen können gespeicherte Pfade für eine Einrichtung von Datenströmen durch die übergeordnete Kommunikationssteuerungseinrichtung wiederverwendet werden.

Zur Durchführung eines Verfahrens entsprechend vorangehenden Ausführungen ist beispielsweise ein Kommunikationsgerät, insbesondere ein Switch, eine Bridge oder ein Gerät mit integriertem Switch bzw. integrierter Bridge, geeignet, das mehrere Anschlüsse zur Verbindung mit weiteren Kommunikationsgeräten sowie ein Koppelelement umfasst, durch das die Anschlüsse schaltbar miteinander verbindbar sind. Außerdem umfasst dieses Kommunikationsgerät eine Reservierungsfunktionskomponente und eine Konfigurationssteuerungseinheit. Des Weiteren ist das Kommunikationsgerät dafür ausgestaltet und eingerichtet, einem Datenstrom zugeordnete Datagramme zwischen einem ersten Kommunikationsgerät an ersten Netzknoten und einem zweiten Kommunikationsgerät an einem zweiten Netzknoten zu übermitteln.

Die Reservierungsfunktionskomponente des obigen Kommunikationsgeräts ist vorzugsweise dafür ausgestaltet und eingerichtet, eine Reservierungsanfrage, die jeweils zumindest Angaben zum ersten und zweiten Netzknoten und Dienstgüteparameter umfasst, zur Reservierung von durch Kommunikationsgeräte für eine Übertragung des Datenstroms bereitzustellenden Ressourcen an eine übergeordnete Kommunikationssteuerungseinrichtung zu übermitteln. Die Konfigurationssteuerungseinheit des Kommunikationsgeräts ist dafür ausgestaltet und eingerichtet, von der übergeordneten Kommunikationssteuerungseinrichtung Konfigurationsinformationen zu empfangen und das Kommunikationsgerät entsprechend den empfangenen Konfigurationsinformationen für die Übertragung des Datenstroms einzurichten.

Zur Durchführung eines Verfahrens entsprechend vorangehenden Ausführungen ist beispielsweise ein Kommunikationsendgerät geeignet, das zumindest einen Anschluss zur Verbindung mit einem Datagramme weiterleitenden Kommunikationsgerät, insbesondere einem Switch, einer Bridge oder einem Gerät mit integriertem Switch bzw. integrierter Bridge, umfasst. Außerdem umfasst dieses Kommunikationsendgerät eine Konfigurationssteuerungseinheit. Des Weiteren ist das Kommunikationsendgerät dafür ausgestaltet und eingerichtet, einem Datenstrom zugeordnete Datagramme zwischen einem ersten Kommunikationsgerät an ersten Netzknoten und einem zweiten Kommunikationsgerät an einem zweiten Netzknoten zu übermitteln.

Darüber hinaus ist das obige Kommunikationsendgerät vorzugsweise dafür ausgestaltet und eingerichtet, mittels einer eigenen Reservierungsfunktionskomponente oder einer Reservierungsfunktionskomponente eines verbundenen Datagramme weiterleitenden Kommunikationsgeräts eine Reservierungsanfrage, die jeweils zumindest Angaben zum ersten und zweiten Netzknoten und Dienstgüteparameter umfasst, zur Reservierung von durch Kommunikationsgeräte für eine Übertragung des Datenstroms bereitzustellenden Ressourcen an eine übergeordnete Kommunikationssteuerungseinrichtung zu übermitteln. Die Konfigurationssteuerungseinheit des Kommunikationsendgeräts ist dafür ausgestaltet und eingerichtet, von der übergeordneten Kommunikationssteuerungseinrichtung Konfigurationsinformationen zu empfangen und das Kommunikationsendgerät entsprechend den empfangenen Konfigurationsinformationen für die Übertragung des Datenstroms einzurichten.

Die erfindungsgemäße Kommunikationssteuerungseinrichtung ist zur Durchführung eines Verfahrens entsprechend vorangehenden Ausführungen vorgesehen und umfasst zumindest einen Anschluss zur Verbindung mit einem Datagramme weiterleitenden Kommunikationsgerät. Das Kommunikationssteuerungseinrichtung ist dafür ausgestaltet und eingerichtet, bei Reservierungsanfragen zur Reservierung von durch Kommunikationsgeräte für eine Übertragung von Datenströmen bereitzustellenden Ressourcen jeweils einen Pfad zu ermitteln und zu überprüfen, ob in Kommunikationsgeräten entlang des jeweiligen Pfades ausreichende Ressourcen für die Übertragung der Datenströme unter Einhaltung spezifizierter Dienstgüteparameter verfügbar sind, und für ausgewählte Kommunikationsgeräte eine vorgeschlagene lokale Zyklusdauer zu ermitteln.

Darüber hinaus ist das erfindungsgemäße Kommunikationssteuerungseinrichtung dafür ausgestaltet und eingerichtet, bei ausreichenden Ressourcen vorgeschlagene lokale Zyklusdauern umfassende Konfigurationsinformationen an Konfigurationssteuerungseinheiten zu übermitteln, die den Kommunikationsgeräten an vom jeweiligen Pfad umfassten Netzknoten zugeordnet sind. Außerdem ist das Kommunikationssteuerungseinrichtung dafür ausgestaltet und eingerichtet, zumindest eine vorgegebene Kommunikationsnetz-Domäne fortlaufend auf Topologieänderungen zu überwachen, für aus Topologieänderungen resultierende geänderte Pfade aktualisierte Konfigurationsinformationen zu ermitteln und zur aktualisierten Geräteeinrichtung an die Konfigurationssteuerungseinheiten zu übermitteln, die den Kommunikationsgeräten an von geänderten Pfaden umfassten Netzknoten zugeordnet sind.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationssystem für ein industrielles Automatisierungssystem,
- Figur 2: eine schematische Darstellung von Kommunikationsgeräten des Kommunikationssystems gemäß Figur 1, bei denen jeweils eine lokale Zyklusdauer eingestellt ist, die ein Vielfaches einer allgemeinen netzweiten Zyklusdauer ist.

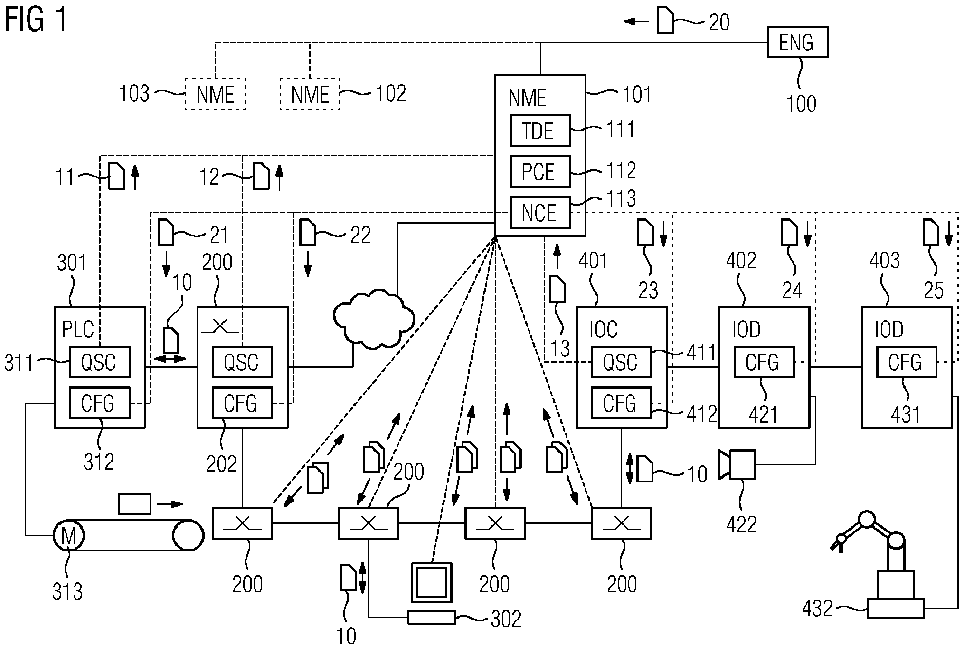

Das in Figur 1 dargestellte Kommunikationssystem für ein industrielles Automatisierungssystem umfasst mehrere Bridges oder Switches 200 als Datagramme weiterleitende Kommunikationsgeräte und übergeordnete Kommunikationssteuerungseinheiten 101-103. Bridges bzw. Switches 200 dienen insbesondere zum Anschluss von speicherprogrammierbaren Steuerungen 301, Bedien- und Beobachtungsstationen 302, I/O-Controllern 401 oder I/O-Modulen 402-403, die ebenfalls Kommunikationsgeräte bzw. Kommunikationsendgeräte darstellen. Im vorliegenden Ausführungsbeispiel ist das Kommunikationssystem als Time-sensitive Network ausgestaltet, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017.

Speicherprogrammierbare Steuerungen 301 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 301 mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 301 und einer durch die speicherprogrammierbare Steuerung 301 gesteuerten Maschine oder Vorrichtung 313. Die Zentraleinheit ist insbesondere für eine Ermittlung geeigneter Steuerungsgrößen aus erfassten Messgrößen vorgesehen. Obige Komponenten der speicherprogrammierbaren Steuerung 301 sind beispielsweise über ein Rückwandbus-System miteinander verbunden.

Auch die I/O-Module 402-403 sind zum Austausch von Steuerungs- und Messgrößen mit angeschlossenen Maschinen oder Vorrichtungen 422, 432 vorgesehen. Zur Steuerung der I/O-Module ist beispielsweise pro Automatisierungszelle ein zugeordneter I/O-Controller 401 vorgesehen. Die I/O-Module 402-403 können grundsätzlich auch durch eine entfernte speicherprogrammierbaren Steuerung 301 angesteuert werden.

Eine Bedien- und Beobachtungsstation 302 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 302 zur Anzeige von Werten eines Regelungskreises und zur Veränderung von Regelungsparametern verwendet. Bedien- und Beobachtungsstationen 302 umfassen zumindest eine graphische Benutzerschnittstelle, ein Eingabegerät, eine Prozessoreinheit und ein Kommunikationsmodul.

Mittels erster Kommunikations- bzw. Automatisierungsgeräte, die insbesondere eine Talker- oder Provider Funktion haben, werden Informationen bzw. Dienste über Datenströme zur Nutzung an zweiten Kommunikations- bzw. Automatisierungsgeräten bereitgestellt, die insbesondere eine Listener- oder Consumer-Funktion haben. Einem Automatisierungsgerät kann gleichzeitig sowohl eine oder mehrere Talker-Funktionen als auch eine oder mehrere Listener-Funktionen haben, beispielsweise wenn es einerseits Automatisierungsdienste bereitstellt und andererseits Automatisierungsdienste anderer Geräte nutzt. Aus diesem Grund werden Datenströme auf Reservierungsanfragen im vorliegenden Ausführungsbeispiel vorzugsweise jeweils bidirektional eingerichtet.

Die speicherprogrammierbare Steuerung 301 und die I/O-Module 402-402 können beispielsweise Messwerte liefern und somit eine Talker-Funktion haben. Dagegen kann die Bedien- und Beobachtungsstation 302 eine Listener-Funktion aufweisen und insbesondere durch die speicherprogrammierbare Steuerung 301 oder die I/O-Module 402-403 bereitgestellte Informationen empfangen. Grundsätzlich könnte die Bedien- und Beobachtungsstation 302 von der speicherprogrammierbaren Steuerung 301 oder den I/O-Modulen 402-403 empfangene Informationen analysieren und hieraus Steuerungsparameter für die speicherprogrammierbare Steuerung 301 oder die I/O-Module 402-403 vorgeben. Somit können sowohl die speicherprogrammierbare Steuerung 301 bzw. die I/O-Module 402-403 als auch die Bedien- und Beobachtungsstation 302 beide Funktionen wahrnehmen.

Zur Übermittlung zeitkritischer Daten werden ausgewählte Datagramme 10 Datenströmen zugeordnet und zwischen ersten Kommunikationsgeräten 301 an ersten Netzknoten und zweiten Kommunikationsgeräten 302, 402-403 an zweiten Netzknoten über zumindest die ersten und zweiten Netzknoten umfassende Pfade übermittelt. Derartige Datenströme können beispielsweise zwischen der speicherprogrammierbaren Steuerung 301 und der Bedien- und Beobachtungsstation 302 oder zwischen der speicherprogrammierbaren Steuerung 301 und den I/O-Module 402-403 eingerichtet werden.

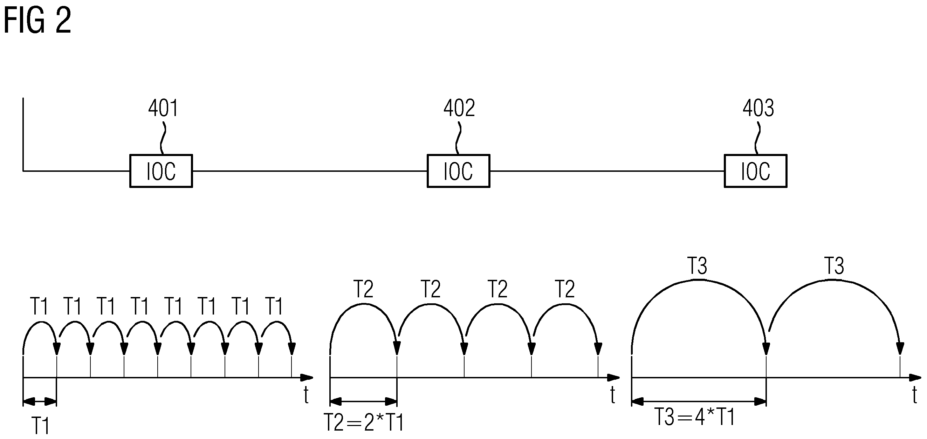

Entsprechend Figur 2 kann an ausgewählten Kommunikationsgeräten 402-403 jeweils eine lokale Zyklusdauer T2, T3 eingestellt werden, die ein Vielfaches einer allgemeinen netzwerkweiten Zyklusdauer T1 ist. Während beispielsweise am I/O-Controller 401 ein allgemeiner netzwerkweiter Sendezyklus T1=31,25 ps eingestellt ist, kann an den beiden I/O-Modulen 402-403 ein Sendezyklus T2=62,5 ps bzw. T3=125 µs eingestellt werden. Dementsprechend ändern sich in den I/O-Modulen 402-403 gegenüber dem I/O-Controller 401 Sendequeue-Belegungsmuster.

Für ankommende Datagramme werden bei einer Weiterleitung ursprüngliche Zyklusdauern von jeweils sendenden Netzknoten beibehalten. Dies bedeutet, dass beispielsweise für zyklischen Datenverkehr bei einer Weiterleitung durch einen Netzknoten mit einem untertakteten Sendezyklus mehrere Sendezeitfenster innerhalb des untertakten Sendezyklus vorgesehen werden. Für zyklischen Datenverkehr, der unmittelbar vom Netzknoten mit untertaktetem Sendezyklus ausgeht, wird grundsätzlich nur ein Sendezeitfenster innerhalb des untertakten Sendezyklus vorgesehen. Eine Einstellung von lokalen Zyklusdauer, die einem Vielfaches einer allgemeinen netzwerkweiten Zyklusdauer entspricht, ist nicht nur bei einer Sendequeue-Steuerung mittels Time-Aware Shaper (vormals IEEE 802.1Qbv, aktuell IEEE 802.1Q-2018) möglich, sondern auch bei einer Sendequeue-Steuerung mittels Credit-Based Shaper (vormals IEEE 802.1Qav, aktuell IEEE 802.1Q-2018), Burst Limiting Shaper, Peristaltic Shaper bzw. Priority-Based Shaper.

Reservierungsanfragen 11-13, die jeweils zumindest Angaben zu einem ersten und zweiten Netzknoten und Dienstgüteparameter umfassen, zur Reservierung von durch Kommunikationsgeräte 200 für eine Übertragung von Datenströmen bereitzustellenden Ressourcen werden jeweils durch eine Reservierungsfunktionskomponente 201, 311, 411, die einem ersten oder zweiten Kommunikationsendgerät 301-302, 402-403 oder einem mit diesem verbundenen Datagramme weiterleitenden Kommunikationsgerät 200, 401 zugeordnet ist, an eine übergeordnete Kommunikationssteuerungseinrichtung 101 übermittelt. Die durch die Kommunikationsgeräte bereitzustellenden Ressourcen umfassen beispielsweise nutzbare Übertragungszeitfenster, Bandbreite, zugesicherte maximale Latenz, Queue-Anzahl, Queue-Cache und Adress-Cache in Switches oder Bridges.

Das Kommunikationssystem kann mehrere übergeordnete Kommunikationssteuerungseinrichtungen 101-103 umfassen. Diese übergeordneten Kommunikationssteuerungseinrichtungen 101-103 können beispielsweise mittels einer in einem Domain Name System erfassten Dienstbeschreibung oder mittels einer Identifizierung entsprechend PROFINET Dynamic Configuration Protocol ermittelt werden, letzteres sogar ohne Projektierung bzw. Engineering. Auf Basis dessen wählen die übergeordneten Kommunikationssteuerungseinrichtungen 101-103 untereinander anhand eines Auswahlkriteriums eine aktive übergeordnete Kommunikationssteuerungseinrichtung aus. Nicht aktive übergeordnete Kommunikationssteuerungseinrichtungen 102-103 werden in einen Bereitschaftszustand versetzt.

Die aktive übergeordnete Kommunikationssteuerungseinrichtung 101 ermittelt bei Reservierungsanfragen mittels einer Pfadberechnungskomponente 112 jeweils einen Pfad und überprüft, ob in den Kommunikationsgeräten 200, 401 entlang des jeweiligen Pfades ausreichende Ressourcen für die Übertragung der Datenströme unter Einhaltung der spezifizierten Dienstgüteparameter verfügbar sind. Für die ausgewählten Kommunikationsgeräte 402-403 ermittelt die aktive übergeordnete Kommunikationssteuerungseinrichtung 101 außerdem jeweils eine vorgeschlagene lokale Zyklusdauer.

Bei ausreichenden Ressourcen erstellt die übergeordnete Kommunikationssteuerungseinrichtung 101 mittels einer Netzwerk-Konfigurationskomponente 113 vorgeschlagene lokale Zyklusdauern umfassende Konfigurationsinformationen 21-25 und übermittelt diese an Konfigurationssteuerungseinheiten 202, 312, 412, 421, 431, die den Kommunikationsgeräten 200, 301-302, 401-403 an den vom jeweiligen Pfad umfassten Netzknoten zugeordnet sind. Darüber hinaus empfängt die übergeordnete Kommunikationssteuerungseinrichtung 101 im vorliegenden Ausführungsbeispiel von einem Engineering-System 100 Konfigurationsrichtlinien 20 und setzt diese in die an die Konfigurationsteuerungseinheiten 202, 312, 412, 421, 431 übermittelten Konfigurationsinformationen 21-25 um. Mittels der Konfigurationsrichtlinien 20 kann in den Kommunikationsgeräten 200, 301-302, 401-403 beispielsweise eine Anwendung von Preemption mit Strict Priority (siehe IEEE 802.1Q-2018) für die Datenströme gesteuert werden. Die Konfigurationssteuerungseinheiten 202, 312, 412, 421, 431 richten die zugeordneten Kommunikationsgeräte 200, 301-302, 401-403 entsprechend den übermittelten Konfigurationsinformationen 21-25 zur Ressourcen-Bereitstellung für die Übertragung der Datenströme ein.

Im vorliegenden Ausführungsbeispiel umfasst jedes Kommunikationsgerät jeweils eine Konfigurationssteuerungseinheit. Bei Kommunikationsendgeräten reicht es grundsätzlich aus, wenn verbundenes, Datagramme weiterleitendes Kommunikationsgerät eine Reservierungsfunktionskomponente zur Übermittlung von Reservierungsanfragen aufweist. In entsprechender Weise fordert der I/O-Controller 401 mittels seiner Reservierungsfunktionskomponente 411 für die I/O-Module Reservierungen von Ressourcen für eine Übertragung von Datenströmen an. Insgesamt kann die übergeordnete Kommunikationssteuerungseinrichtung 101 auf erfolgreiche Reservierungsanfragen jeweils eine dem Datenstrom zugeordnete Datenstrom-Ziel-Adresse an die Reservierungsfunktionskomponente des ersten Kommunikationsendgeräts oder des mit diesem verbundenen, Datagramme weiterleitenden Kommunikationsgeräts und an die Reservierungsfunktionskomponente des zweiten Kommunikationsendgeräts oder des mit diesem verbundenen, Datagramme weiterleitenden Kommunikationsgeräts übermitteln.

Mittels einer Topologieerfassungseinheit 111 überwacht die übergeordnete Kommunikationssteuerungseinrichtung 101 zumindest eine vorgegebene Kommunikationsnetz-Domäne fortlaufend auf Topologieänderungen. Domänengrenzen werden vorzugsweise mittels Link Layer Discovery Protocol ermittelt. Eine Kommunikationsgeräteidentifizierung kann beispielsweise mittels Dynamic Host Configuration Protocol oder PROFINET Dynamic Configuration Protocol erfolgen. Die Netzwerk-Konfigurationskomponente 113 der übergeordneten Kommunikationssteuerungseinrichtung 101 ermittelt für aus Topologieänderungen resultierende geänderte Pfade aktualisierte Konfigurationsinformationen 21-25 und übermittelt diese zur aktualisierten Geräteeinrichtung an die Konfigurationssteuerungseinheiten 202, 312, 412, 421, 431, die den Kommunikationsgeräten 200, 301-302, 401-403 an von geänderten Pfaden umfassten Netzknoten zugeordnet sind.

Entsprechend einer bevorzugten Ausführungsform speichert die übergeordnete Kommunikationssteuerungseinrichtung 101 jeweils eine zuletzt erfasste Topologie des Kommunikationssystems und für erfolgreich eingerichtete Datenströme ermittelte Pfade. Bei einem Betriebsstart des Kommunikationssystems lädt die übergeordnete Kommunikationssteuerungseinrichtung 101 die zuletzt erfasste Topologie und ermittelt mittels der Topologieerfassungseinheit 111 Topologieänderungen. In Abhängigkeit von ermittelten Topologieänderungen kann die übergeordnete Kommunikationssteuerungseinrichtung 101 gespeicherte Pfade für eine Einrichtung von Datenströmen wiederverwenden.

## Patentansprüche

1. Verfahren zum Betrieb eines Kommunikationssystems zur Übermittlung zeitkritischer Daten, bei dem
- ausgewählte Datagramme (10) Datenströmen zugeordnet und zwischen ersten Kommunikationsgeräten an ersten Netzknoten und zweiten Kommunikationsgeräten an zweiten Netzknoten über zumindest die ersten und zweiten Netzknoten umfassende Pfade übermittelt werden, wobei an ausgewählten Kommunikationsgeräten (402-403) jeweils eine lokale Zyklusdauer einstellbar ist, die ein Vielfaches einer allgemeinen Zyklusdauer ist,
- Reservierungsanfragen (11-13), die jeweils zumindest Angaben zu einem ersten und zweiten Netzknoten und Dienstgüteparameter umfassen, zur Reservierung von durch Kommunikationsgeräte für eine Übertragung von Datenströmen bereitzustellenden Ressourcen jeweils durch eine Reservierungsfunktionskomponente (201, 311, 411), die einem ersten oder zweiten Kommunikationsendgerät oder einem mit diesem verbundenen Datagramme weiterleitenden Kommunikationsgerät (200, 301-302, 401-403) zugeordnet ist, an eine übergeordnete Kommunikationssteuerungseinrichtung (101) übermittelt werden,
- die übergeordnete Kommunikationssteuerungseinrichtung (101) bei Reservierungsanfragen jeweils einen Pfad ermittelt und überprüft, ob in den Kommunikationsgeräten entlang des jeweiligen Pfades ausreichende Ressourcen für die Übertragung der Datenströme unter Einhaltung der spezifizierten Dienstgüteparameter verfügbar sind, und für die ausgewählten Kommunikationsgeräte eine vorgeschlagene lokale Zyklusdauer ermittelt,
- die übergeordnete Kommunikationssteuerungseinrichtung (101) bei ausreichenden Ressourcen vorgeschlagene lokale Zyklusdauern umfassende Konfigurationsinformationen (21-25) an Konfigurationssteuerungseinheiten (202, 312, 412, 421, 431) übermittelt, die den Kommunikationsgeräten an den vom jeweiligen Pfad umfassten Netzknoten zugeordnet sind,
- die Konfigurationssteuerungseinheiten (202, 312, 412, 421, 431) die zugeordneten Kommunikationsgeräte entsprechend den übermittelten Konfigurationsinformationen zur Ressourcen-Bereitstellung für die Übertragung der Datenströme einrichten,
- die übergeordnete Kommunikationssteuerungseinrichtung (101) zumindest eine vorgegebene Kommunikationsnetz-Domäne fortlaufend auf Topologieänderungen überwacht,
- die übergeordnete Kommunikationssteuerungseinrichtung (101) für aus Topologieänderungen resultierende geänderte Pfade aktualisierte Konfigurationsinformationen ermittelt und zur aktualisierten Geräteeinrichtung an die Konfigurationssteuerungseinheiten (202, 312, 412, 421, 431) übermittelt, die den Kommunikationsgeräten an von geänderten Pfaden umfassten Netzknoten zugeordnet sind.

2. Verfahren nach Anspruch 1,
bei dem die durch die Kommunikationsgeräte bereitzustellenden Ressourcen nutzbare Übertragungszeitfenster, Bandbreite, zugesicherte maximale Latenz, Queue-Anzahl, Queue-Cache und/oder Adress-Cache in Switches oder Bridges umfassen.

3. Verfahren nach einem der Ansprüche 1 oder 2,
bei dem die ersten Kommunikationsgeräte über ein Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, mit den zweiten Kommunikationsgeräten verbunden sind.

4. Verfahren nach Anspruch 3,
bei dem eine Weiterleitung der ausgewählten Datagramme mittels Frame Preemption, insbesondere gemäß IEEE 802.1Q-2018, Time-Aware Shaper, insbesondere gemäß IEEE 802.1Q-2018, Credit-Based Shaper, insbesondere gemäß IEEE 802.1Q-2018, Burst Limiting Shaper, Peristaltic Shaper und/oder Priority-Based Shaper gesteuert wird.

5. Verfahren nach einem der Ansprüche 1 bis 4,
bei dem die Datenströme auf Reservierungsanfragen jeweils bidirektional eingerichtet werden.

6. Verfahren nach einem der Ansprüche 1 bis 5,
bei dem die übergeordnete Kommunikationssteuerungseinrichtung (101) mittels Link Layer Discovery Protocol Domänengrenzen ermittelt.

7. Verfahren nach Anspruch 6,
bei dem die übergeordnete Kommunikationssteuerungseinrichtung mittels Dynamic Host Configuration Protocol oder PROFINET Dynamic Configuration Protocol eine Kommunikationsgeräteidentifizierung durchführt.

8. Verfahren nach einem der Ansprüche 1 bis 7,
bei dem die übergeordnete Kommunikationssteuerungseinrichtung (101) von einem Engineering-System Konfigurationsrichtlinien empfängt und diese in die an die Konfigurationsteuerungseinheiten (202, 312, 412, 421, 431) übermittelten Konfigurationsinformationen umsetzt.

9. Verfahren nach Anspruch 8,
bei dem mittels der Konfigurationsrichtlinien in den Kommunikationsgeräten eine Anwendung von Pre-emption mit Strict Priority für die Datenströme gesteuert wird.

10. Verfahren nach einem der Ansprüche 1 bis 9,
bei dem jedes Kommunikationsgerät jeweils eine Konfigurationssteuerungseinheit (202, 312, 412, 421, 431) umfasst und bei dem die übergeordnete Kommunikationssteuerungseinrichtung (101) auf erfolgreiche Reservierungsanfragen jeweils eine dem Datenstrom zugeordnete Datenstrom-Ziel-Adresse an die Reservierungsfunktionskomponente (201, 311, 411) des ersten Kommunikationsendgeräts oder des mit diesem verbundenen Datagramme weiterleitenden Kommunikationsgeräts und an die Reservierungsfunktionskomponente (201, 311, 411) des zweiten Kommunikationsendgeräts oder des mit diesem verbundenen Datagramme weiterleitenden Kommunikationsgeräts übermittelt.

11. Verfahren nach einem der Ansprüche 1 bis 10,
bei dem das Kommunikationssystem einem industriellen Automatisierungssystem zugeordnet ist, das mehrere Steuerungsgeräte (PLC, IOC) und diesen zugeordnete Eingabe/Ausgabe-Geräte (IOD) umfasst, bei dem jedes Steuerungsgerät jeweils eine Reservierungsfunktionskomponente (201, 311, 411) umfasst und bei dem die Steuerungsgeräte mittels ihrer Reservierungsfunktionskomponenten (201, 311, 411) für die zugeordneten Eingabe/Ausgabe-Geräte Reservierungen von Ressourcen für eine Übertragung von Datenströmen anfordern.

12. Verfahren nach einem der Ansprüche 1 bis 11,
bei dem das Kommunikationssystem mehrere übergeordnete Kommunikationssteuerungseinrichtungen (101) umfasst, bei dem die übergeordneten Kommunikationssteuerungseinrichtungen (101) mittels einer in einem Domain Name System erfassten Dienstbeschreibung oder mittels einer Identifizierung entsprechend PROFINET Dynamic Configuration Protocol ermittelt werden und bei dem die übergeordneten Kommunikationssteuerungseinrichtungen (101) untereinander anhand eines Auswahlkriteriums eine aktive übergeordnete Kommunikationssteuerungseinrichtung auswählen, wobei nicht aktive übergeordnete Kommunikationssteuerungseinrichtungen in einen Bereitschaftszustand versetzt werden.

13. Verfahren nach einem der Ansprüche 1 bis 12,
bei dem die übergeordnete Kommunikationssteuerungseinrichtung (101) jeweils eine zuletzt erfasste Topologie des Kommunikationssystems und für erfolgreich eingerichtete Datenströme ermittelte Pfade speichert, bei dem die übergeordnete Kommunikationssteuerungseinrichtung (101) die zuletzt erfasste Topologie bei einem Betriebsstart des Kommunikationssystems lädt und Topologieänderungen ermittelt und bei dem die übergeordnete Kommunikationssteuerungseinrichtung in Abhängigkeit von ermittelten Topologieänderungen gespeicherte Pfade für eine Einrichtung von Datenströmen wiederverwendet.

14. Kommunikationssteuerungseinrichtung mit
- zumindest einem Anschluss zur Verbindung mit einem Datagramme weiterleitenden Kommunikationsgerät,
- wobei das Kommunikationssteuerungseinrichtung dafür ausgestaltet und eingerichtet ist, bei Reservierungsanfragen (11-13) zur Reservierung von durch Kommunikationsgeräte für eine Übertragung von Datenströmen bereitzustellenden Ressourcen jeweils einen Pfad zu ermitteln und zu überprüfen, ob in Kommunikationsgeräten entlang des jeweiligen Pfades ausreichende Ressourcen für die Übertragung der Datenströme unter Einhaltung spezifizierter Dienstgüteparameter verfügbar sind, und für ausgewählte Kommunikationsgeräte (402-403) eine vorgeschlagene lokale Zyklusdauer zu ermitteln,
- wobei das Kommunikationssteuerungseinrichtung dafür ausgestaltet und eingerichtet ist, bei ausreichenden Ressourcen vorgeschlagene lokale Zyklusdauern umfassende Konfigurationsinformationen (21-25) an Konfigurationssteuerungseinheiten (202, 312, 412, 421, 431) zu übermitteln, die den Kommunikationsgeräten an vom jeweiligen Pfad umfassten Netzknoten zugeordnet sind,
- wobei das Kommunikationssteuerungseinrichtung dafür ausgestaltet und eingerichtet ist, zumindest eine vorgegebene Kommunikationsnetz-Domäne fortlaufend auf Topologieänderungen zu überwachen, für aus Topologieänderungen resultierende geänderte Pfade aktualisierte Konfigurationsinformationen zu ermitteln und zur aktualisierten Geräteeinrichtung an die Konfigurationssteuerungseinheiten (202, 312, 412, 421, 431) zu übermitteln, die den Kommunikationsgeräten an von geänderten Pfaden umfassten Netzknoten zugeordnet sind.

## Claims

1. Method for operating a communication system for transmitting time-critical data, in which
- selected datagrams (10) are assigned to data streams and transmitted between first communication devices at first network nodes and second communication devices at second network nodes via paths comprising at least the first and second network nodes, wherein a local cycle duration that is a multiple of a general cycle duration can be set on selected communication devices (402-403) in each case,
- reservation requests (11-13), which comprise in each case at least details pertaining to a first and a second network node and quality of service parameters, are transmitted, to reserve resources to be provided by communication devices for a transfer of data streams, to a superordinate communication control device (101) in each case by a reservation function component (201, 311, 411) that is assigned to a first or second communication terminal or to a communication device (200, 301-302, 401-403) that is connected thereto and forwards datagrams,
- in the event of reservation requests the superordinate communication control device (101) in each case ascertains a path and checks whether sufficient resources for the transfer of the data streams while observing the specified quality of service parameters are available in the communication devices along the respective path, and ascertains a proposed local cycle duration for the selected communication devices,
- if there are sufficient resources then the superordinate communication control device (101) transmits configuration information (21-25) comprising proposed local cycle durations to configuration control units (202, 312, 412, 421, 431) that are assigned to the communication devices at the network nodes that the respective path comprises,
- the configuration control units (202, 312, 412, 421, 431) set up the assigned communication devices for resource provision for the transfer of the data streams in accordance with the transmitted configuration information,
- the superordinate communication control device (101) continually monitors at least one predefined communication network domain for topology changes,
- the superordinate communication control device (101) ascertains updated configuration information for changed paths resulting from topology changes and transmits said information for the purpose of updated device setup to the configuration control units (202, 312, 412, 421, 431) that are assigned to the communication devices at network nodes that changed paths comprise.

2. Method according to Claim 1,
in which the resources to be provided by the communication devices comprise usable transfer time windows, bandwidth,
assured maximum latency, number of queues, queue cache and/or address cache in switches or bridges.

3. Method according to either of Claims 1 and 2,
in which the first communication devices are connected to the second communication devices via a time-sensitive network, in particular in accordance with IEEE 802.3-2018, IEEE 802.1Q-2018,
IEEE 802.1AB-2016, IEEE 802.1AS-2011, IEEE 802.1BA-2011 and/or IEEE 802.1CB-2017.

4. Method according to Claim 3,
in which forwarding of the selected datagrams is controlled by means of frame pre-emption, in particular in accordance with IEEE 802.1Q-2018, time-aware shapers, in particular in accordance with IEEE 802.1Q-2018, credit-based shapers, in particular in accordance with IEEE 802.1Q-2018, burst limiting shapers, peristaltic shapers and/or priority-based shapers.

5. Method according to one of Claims 1 to 4,
in which the data streams are set up bidirectionally upon reservation requests in each case.

6. Method according to one of Claims 1 to 5,
in which the superordinate communication control device (101) ascertains domain boundaries by means of the Link Layer Discovery Protocol.

7. Method according to Claim 6,
in which the superordinate communication control device performs communication device identification by means of the Dynamic Host Configuration Protocol or PROFINET Dynamic Configuration Protocol.

8. Method according to one of Claims 1 to 7,
in which the superordinate communication control device (101) receives configuration guidelines from an engineering system and converts said configuration guidelines into the configuration information transmitted to the configuration control units (202, 312, 412, 421, 431).

9. Method according to Claim 8,
in which the configuration guidelines are used to control an application of pre-emption with strict priority for the data streams in the communication devices.

10. Method according to one of Claims 1 to 9,
in which each communication device comprises a configuration control unit (202, 312, 412, 421, 431) in each case and in which the superordinate communication control device (101) responds to successful reservation requests by transmitting in each case a data stream destination address, assigned to the data stream, to the reservation function component (201, 311, 411) of the first communication terminal or of the communication device that is connected thereto and forwards datagrams and to the reservation function component (201, 311, 411) of the second communication terminal or of the communication device that is connected thereto and forwards datagrams.

11. Method according to one of Claims 1 to 10, in which the communication system is assigned to an industrial automation system that comprises multiple controllers (PLC, IOC) and input/output devices (IOD) assigned thereto, in which each controller comprises a reservation function component (201, 311, 411) in each case and in which the controllers use their reservation function components (201, 311, 411) to request reservations of resources for the assigned input/output devices for a transfer of data streams.

12. Method according to one of Claims 1 to 11,
in which the communication system comprises multiple superordinate communication control devices (101), in which the superordinate communication control devices (101) are ascertained by means of a service description recorded in a domain name system or by means of an identification in accordance with the PROFINET Dynamic Configuration Protocol and in which the superordinate communication control devices (101) select an active superordinate communication control device among one another on the basis of a selection criterion, non-active superordinate communication control devices being put into a standby state.

13. Method according to one of Claims 1 to 12,
in which the superordinate communication control device (101) stores in each case a most recently detected topology of the communication system and paths ascertained for data streams that have been set up successfully, in which the superordinate communication control device (101) loads the most recently detected topology at the start of operation of the communication system and ascertains topology changes, and in which the superordinate communication control device takes ascertained topology changes as a basis for reusing stored paths for setting up data streams.

14. Communication control device having
- at least one connection for connection to a communication device that forwards datagrams,
- wherein the communication control device is designed and set up so as, in the event of reservation requests (11-13) to reserve resources to be provided by communication devices for a transfer of data streams, in each case to ascertain a path and to check whether sufficient resources for the transfer of the data streams while observing specified quality of service parameters are available in communication devices along the respective path, and to ascertain a proposed local cycle duration for selected communication devices (402-403),
- wherein the communication control device is designed and set up so as, if there are sufficient resources, to transmit configuration information (21-25) comprising proposed local cycle durations to configuration control units (202, 312, 412, 421, 431) that are assigned to the communication devices at network nodes that the respective path comprises,
- wherein the communication control device is designed and set up to continually monitor at least one predefined communication network domain for topology changes, to ascertain updated configuration information for changed paths resulting from topology changes and to transmit said information for the purpose of updated device setup to the configuration control units (202, 312, 412, 421, 431) that are assigned to the communication devices at network nodes that changed paths comprise.

## Revendications

1. Procédé pour faire fonctionner un système de communication pour la transmission de données critiques du point de vue du temps, dans lequel
- on associe des datagrammes (10) sélectionnés à des flux de données et on les transmet entre des premiers appareils de communication en des premiers noeuds de réseau et des deuxièmes appareils de communication en des deuxièmes noeuds de réseau par des chemins comprenant au moins les premiers et deuxièmes noeuds de réseau, dans lequel, sur des appareils (402 - 403) de communication sélectionnés est réglable respectivement une durée de cycle local, qui est un multiple d'une durée de cycle général,
- on transmet, à un dispositif (101) de commande de communication supérieur hiérarchiquement, des demandes (11 - 13) de réservation, qui comprennent respectivement au moins des indications sur un premier et un deuxième noeuds de réseau et des paramètres de qualité de service, pour la réservation de ressources, à mettre à disposition par des appareils de communication pour une transmission de flux de données, respectivement par un composant (201, 311, 411) de fonction de réservation, qui est associé à un premier ou à un deuxième terminal de communication ou à un appareil (200, 301 - 302, 401 - 403) de communication relié à celui-ci et acheminant des datagrammes,
- le dispositif (101) de commande de communication supérieur hiérarchiquement détermine, lors des demandes de réservations, respectivement un chemin et contrôle si dans les appareils de communication sont disponibles des ressources suffisantes le long du chemin respectif pour la transmission des flux de données en respectant les paramètres de qualité de service spécifiés et détermine, pour les appareils de communication sélectionnés, une durée de cycle local proposée,
- le dispositif (101) de commande de communication supérieur hiérarchiquement transmet, si les ressources sont suffisantes, des informations (21 - 25) de configuration comprenant des durées de cycle local proposées à des unités (202, 312, 412, 421, 431) de commande de configuration, qui sont associées aux appareils de communication aux noeuds de réseau compris par le chemin respectif,
- les unités (202, 312, 412, 421, 431) de commande de configuration installent les appareils de communication associés, conformément aux informations de configuration transmises pour la mise à disposition de ressources pour la transmission des flux de données,
- le dispositif (101) de commande de communication supérieur hiérarchiquement contrôle en continu les variations de topologie d'au moins un domaine du réseau de communication donné à l'avance,
- le dispositif (101) de commande de communication supérieur hiérarchiquement détermine, pour des chemins modifiés provenant des variations de topologie, des informations de configuration mises à jour et, pour le dispositif d'appareil mis à jour, les transmet aux unités (202, 312, 412, 421, 431) de commande de configuration, qui sont associées aux appareils de communication aux noeuds de réseau contenus dans les chemins modifiés.

2. Procédé suivant la revendication 1,
dans lequel les ressources, à mettre à disposition par les appareils de communication, comprennent des fenêtres de temps de transmission utiles, des largeurs de bandes, une latence maximum à sécuriser, un nombre de queue, un cache de queue et/ou une cache d'adresse dans des switches ou des bridges.

3. Procédé suivant l'une des revendications 1 ou 2,
dans lequel les premiers appareils de communication sont reliés aux deuxièmes appareils de communication par un time-sensitive network, en particulier conformément à IEEE 802.3-2018, IEEE 802.1Q-2018, IEEE 802.1AB-2016, IEEE 802.1AS-2011, IEEE 802.1BA-2011 et/ou IEEE 802.1CB-2017.

4. Procédé suivant la revendication 3,
dans lequel on commande un acheminement des datagrammes sélectionnés, au moyen de frame preemption, en particulier suivant IEEE 802.1Q-2018, de time-aware shaper, en particulier suivant IEEE 802.1Q-2018, de credit-based shaper, en particulier suivant IEEE 802.1Q-2018, de burst limited shaper, de peristaltic shaper et/ou de priority-based shaper.

5. Procédé suivant l'une des revendications 1 à 4,
dans lequel on installe les flux de données sur des demandes de réservations respectivement bidirectionnellement.

6. Procédé suivant l'une des revendications 1 à 5,
dans lequel le dispositif (101) de commande de communication supérieur hiérarchiquement détermine des limites de domaine au moyen du protocole link layer discovery.

7. Procédé suivant la revendication 6,
dans lequel le dispositif de commande communication supérieur hiérarchiquement effectue une identification d'appareil de communication au moyen du protocole dynamic host configuration ou du protocole PROFINET dynamic configuration.

8. Procédé suivant l'une des revendications 1 à 7,
dans lequel le dispositif (101) de commande de communication supérieur hiérarchiquement reçoit, d'un système d'ingénierie, des directives de configuration et transforme celles-ci en les informations de configuration transmises aux unités (202, 312, 412, 421, 431) de commande de configuration.

9. Procédé suivant la revendication 8,
dans lequel on commande, au moyen des directives de configuration dans les appareils de communication, une application de préemption avec strict priority pour les flux de données.

10. Procédé suivant l'une des revendications 1 à 9,
dans lequel chaque appareil de communication comprend respectivement une unité (202, 312, 412, 421, 431) de commande de configuration, et dans lequel le dispositif (101) de commande communication supérieur hiérarchiquement transmet, sur des demandes de réservations couronnées de succès, respectivement une adresse cible de flux de données, associée au flux de données, au composant (201, 311, 411) de fonction de réservation du premier terminal de communication ou de l'appareil de communication acheminant des datagrammes relié à celui-ci et au composant (201, 311, 411) de fonction de réservation du deuxième terminal de communication ou de l'appareil de communication acheminant des datagrammes relié à celui-ci.

11. Procédé suivant l'une des revendications 1 à 10,
dans lequel le système de communication est associé à un système d'automatisation industrielle, qui comprend plusieurs appareils (PLC, IOC) de commande et des appareils (IOD) d'entrée / sortie associés à ceux-ci, dans lequel chaque appareil de commande comprend respectivement un composant (201, 311, 411) de fonction de réservation, et dans lequel les appareils de commande demandent, au moyen de leur composant (201, 311, 411) de fonction de réservation pour les appareils d'entrée / sortie associés, des réservations de ressources pour une transmission de flux de données.

12. Procédé suivant l'une des revendications 1 à 11,
dans lequel le système de communication comprend plusieurs dispositifs (101) de commande de communication supérieurs hiérarchiquement, dans lequel on détermine les dispositifs (101) de commande de communication supérieurs hiérarchiquement, au moyen d'une description de service saisie dans un domain name system ou au moyen d'une identification conformément au protocole PROFINET dynamic configuration, et dans lequel les dispositifs (101) de commande de communication supérieurs hiérarchiquement sélectionnent entre eux, à l'aide d'un critère de sélection, un dispositif de commande de communication actif supérieur hiérarchiquement, dans lequel on met des appareils de commande de communication supérieurs hiérarchiquement, qui sont inactifs, dans un état de disponibilité.

13. Procédé suivant l'une des revendications 1 à 12,
dans lequel le dispositif (101) de commande de communication supérieur hiérarchiquement met en mémoire respectivement une topologie détectée en dernier du système de communication et des chemins déterminés pour des flux de données établis d'une manière couronnée de succès, dans lequel le dispositif (101) de commande de communication supérieur hiérarchiquement charge la topologie détectée en dernier pour un type de fonctionnement du système de communication et détermine des modifications de la topologie, et dans lequel le dispositif de commande de communication supérieur hiérarchiquement réutilise, en fonction de modifications de topologie déterminées, des chemins mis en mémoire pour un établissement de flux de données.

14. Dispositif de commande de communication comprenant
- au moins une connexion de liaison à un appareil de communication acheminant des datagrammes,
- dans lequel le dispositif de commande de communication est conformé et agencé pour déterminer, s'il y a des demandes (11 - 13) de réservation pour la réservation de ressources à mettre à disposition par des appareils de communication, pour une transmission de flux de données, respectivement un chemin et contrôle si, dans des appareils de communication le long du chemin respectif, sont disponibles des ressources suffisantes pour la transmission des flux de données, tout en respectant des paramètres de qualité de service spécifiques et pour des appareils (402 - 403) de communication sélectionnés pour déterminer une durée de cycle local proposée,
- dans lequel le dispositif de commande de communication est conformé et agencé pour transmettre, s'il y a des ressources suffisantes, des informations (21 - 25) de configuration comprenant des durées de cycle local proposées à des unités (202, 312, 412, 421, 431) de commande de configuration, qui sont associées aux appareils de communication aux noeuds de réseaux contenus dans le chemin respectif,
- dans lequel le dispositif de commande de communication est conformé et agencé pour contrôler en continu des modifications de topologie d'au moins un domaine de réseau de communication donné à l'avance, pour déterminer, pour des chemins modifiés provenant de modifications de topologie, des informations de configuration mises à jour et pour les transmettre, pour le dispositif d'appareil mis à jour, aux unités (202, 312, 412, 421, 431) de commande de configuration, qui sont associées aux appareils de communication aux noeuds de réseau contenus dans les chemins modifiés.
